# DEMANDE DE BREVET EUROPEEN

(11) **EP 1 026 612 A1**
(43) Date de publication de la demande: **09.08.2000**
(21) Numéro de dépôt: 00400252.3
(22) Date de dépôt: 31.01.2000
(51) Int. Cl.: G06F 17/60

(54) **Système d'évaluation des performances d'au moins une valeur de placement financier**

(30) Priorité: 03.02.1999 FR 9901249
(71) Demandeur: Banque Cortal, 75116 Paris (FR)
(72) Inventeur: Thibaut, Cécile, 94130 Nogent sur Marne (FR); Trecco, René, 92190 Meudon (FR)
(74) Mandataire: Habasque, Etienne Joel Jean-François

(57) **Abrégé**

Ce système comporte une base de données (1) dans laquelle sont stockées au moins des informations d'identification et d'évolution dans le temps, d'au moins un ensemble de valeurs de placement financier (2,3), contenant la valeur d'entrée, au moins un répertoire pré-établi (4,5) contenant des informations d'identification d'au moins une valeur de référence sélectionnée parmi les valeurs de l'ensemble de la base de données, des moyens (6) d'acquisition d'informations d'identification de la valeur d'entrée, des moyens (8) d'acquisition des informations d'évolution des valeurs d'entrée et de référence dans la base de données, et des moyens (6) de comparaison des informations d'évolution de ces valeurs d'entrée et de référence pour permettre l'évaluation des performances de la valeur d'entrée par rapport à la valeur de référence.

## Description

La présente invention concerne un système d'évaluation des performances d'au moins une valeur de placement financier.

Il est actuellement relativement difficile d'apprécier objectivement les performances d'un produit financier.

En effet, il existe un nombre tellement important et une telle variété de produits financiers, que toute évaluation d'un produit particulier devient relativement aléatoire et subjective pour la plupart des individus.

Le but de l'invention est de résoudre ces problèmes.

A cet effet, l'invention a pour objet un système d'évaluation des performances d'au moins une valeur de placement financier d'entrée, évolutive dans le temps, comportant:
- une base de données dans laquelle sont stockées au moins des informations d'identification et d'évolution dans le temps, d'au moins un ensemble de valeurs de placement financier, contenant la valeur d'entrée,
- au moins un répertoire pré-établi contenant des informations d'identification d'au moins une valeur de référence sélectionnée parmi les valeurs de l'ensemble de la base de données,
- des moyens d'acquisition d'informations d'identification de la valeur d'entrée,
- des moyens d'acquisition des informations d'évolution des valeurs d'entrée et de référence dans la base de données, et
- des moyens de comparaison des informations d'évolution de ces valeurs d'entrée et de référence pour permettre l'évaluation des performances de la valeur d'entrée par rapport à la valeur de référence.

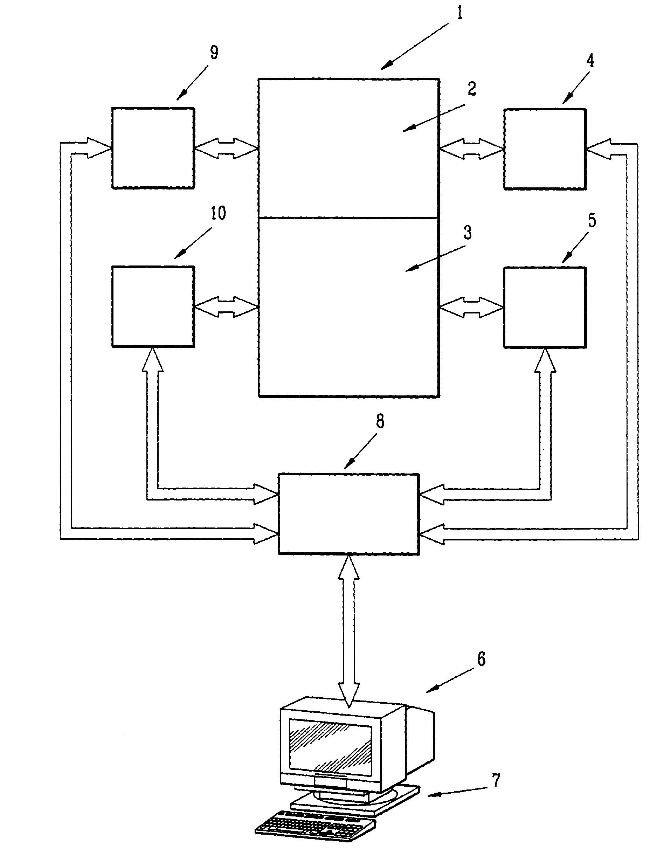

L'invention sera mieux comprise à l'aide de la description qui va suivre, donnée uniquement à titre d'exemple et faite en se référant au dessin annexé, qui représente un schéma synoptique illustrant la structure d'un exemple de réalisation d'un système d'évaluation selon l'invention.

On a en effet représenté sur cette figure, un système d'évaluation des performances d'au moins une valeur de placement financier d'entrée, évolutive dans le temps.

Ce système comporte une base de données désignée par la référence générale 1, dans laquelle sont stockées au moins des informations d'identification et d'évolution dans le temps, d'au moins un ensemble de valeurs de placement financier, contenant la valeur d'entrée. Ces valeurs sont par exemple des actions de société, des fonds communs de placement, etc.

Dans l'exemple de réalisation représenté, la base de données comporte deux ensembles de valeurs de placement financier désignés par les références générales 2 et 3.

Le système comporte également au moins un répertoire pré-établi contenant des informations d'identification d'au moins une valeur de référence sélectionnée parmi les valeurs du ou de chaque ensemble de la base de données.

Dans l'exemple de réalisation représenté, deux répertoires 4 et 5 sont donc utilisés en association avec les ensembles de valeurs 2 et 3.

Ces répertoires sont alors utilisés pour évaluer les performances d'une valeur d'entrée, introduite dans le système par l'individu grâce à des moyens d'acquisition d'informations d'identification de cette valeur d'entrée. Ces moyens sont désignés par la référence générale 6 et comportent par exemple un terminal d'ordinateur muni de moyens d'affichage d'informations, désigné par la référence générale 7 et permettant à un individu d'entrer les informations d'identification de la valeur dont il souhaite évaluer les performances.

Ce terminal est alors associé à des moyens d'acquisition, désignés par la référence générale 8, des informations d'évolution de la ou de chaque valeur de référence dans la base de données, à travers les répertoires par exemple 4 et 5 décrits précédemment et de la valeur d'entrée, à travers des tampons de transfert de données désignés par les références générales 9 et 10 sur cette figure, associés aux ensembles correspondants de valeurs de la base.

Enfin, le système comporte des moyens de comparaison des informations d'évolution de ces valeurs d'entrée et de référence pour permettre l'évaluation des performances de la valeur d'entrée par rapport à la valeur de référence.

Comme on l'a indiqué précédemment, la base de données 1 peut contenir différents ensembles de valeurs de placement financier correspondant par exemple à différentes catégories de valeurs et le système comporte alors au moins un répertoire pré-établi associé à chaque ensemble et des moyens d'acquisition de la catégorie de la valeur d'entrée pour accéder au répertoire et à l'ensemble de valeurs correspondant, formés par exemple par les moyens 8 décrits précédemment.

Les moyens de comparaison peuvent comporter des moyens d'affichage des informations d'évolution des valeurs d'entrée et de référence et des moyens de calcul des pertes/gains correspondants, formés par exemple par le terminal 7 et, plus particulièrement, les moyens d'affichage d'informations de celui-ci.

Ceux-ci peuvent alors être utilisés pour comparer les performances des valeurs d'entrée et de référence sur différentes périodes de temps sélectionnables par exemple par l'individu.

Les informations d'identification de chaque valeur peuvent par exemple comporter un code d'identification de celle-ci, au moins une portion du nom de celle-ci et/ou le nom de l'émetteur de celle-ci.

Le ou chaque répertoire peut être pré-établi par un organisme financier.

On conçoit alors que grâce à un tel système, on stocke des ensembles de valeurs de placement financier et l'organisme financier détermine un répertoire dans lequel sont stockées des informations d'identification d'au moins une valeur de référence sélectionnée parmi les valeurs de l'ensemble de la base de données, cette valeur de référence servant de valeur étalon pour évaluer les performances d'une valeur de placement financier entrée par un individu.

Une telle structure permet d'acquérir les informations d'évolution des valeurs d'entrée et de référence et de les comparer afin de permettre une évaluation la plus objective possible.

Il va de soi bien entendu que d'autres modes de réalisation de ce système peuvent être envisagés.

## Revendications

1. Système d'évaluation des performances d'au moins une valeur de placement financier d'entrée, évolutive dans le temps, comportant :
- une base de données (1) dans laquelle sont stockées au moins des informations d'identification et d'évolution dans le temps, d'au moins un ensemble de valeurs de placement financier (2,3), contenant la valeur d'entrée,
- au moins un répertoire pré-établi (4,5) contenant des informations d'identification d'au moins une valeur de référence sélectionnée parmi les valeurs de l'ensemble de la base de données,
- des moyens (6) d'acquisition d'informations d'identification de la valeur d'entrée,
- des moyens (8) d'acquisition des informations d'évolution des valeurs d'entrée et de référence dans la base de données, et
- des moyens (6) de comparaison des informations d'évolution de ces valeurs d'entrée et de référence pour permettre l'évaluation des performances de la valeur d'entrée par rapport à la valeur de référence.

2. Système selon la revendication 1, caractérisé en ce que la base de données (1) contient différents ensembles (2,3) de valeurs de placement financier correspondant à différentes catégories de valeurs et en ce que le système comporte au moins un répertoire pré-établi (4,5) associé à chaque ensemble et des moyens (8) d'acquisition de la catégorie de la valeur d'entrée pour accéder au répertoire et à l'ensemble de valeurs correspondants.

3. Système selon la revendication 1 ou 2, caractérisé en ce que les moyens de comparaison (6) comprennent des moyens d'affichage (7) des informations d'évolution des valeurs d'entrée et de référence.

4. Système selon l'une quelconque des revendications précédentes, caractérisé en ce que les moyens de comparaison comprennent des moyens de calcul des gains/pertes correspondants.

5. Système selon l'une quelconque des revendications précédentes, caractérisé en ce que les moyens de comparaison comprennent des moyens de comparaison de l'évolution des valeurs d'entrée et de référence sur différentes périodes de temps sélectionnables.

6. Système selon l'une quelconque des revendications précédentes, caractérisé en ce que les informations d'identification de chaque valeur comportent un code d'identification de celle-ci.

7. Système selon l'une quelconque des revendications précédentes, caractérisé en ce que les informations d'identification de chaque valeur comportent au moins une portion du nom de celle-ci.

8. Système selon l'une quelconque des revendications précédentes, caractérisé en ce que les informations d'identification de chaque valeur comportent le nom de l'émetteur de celle-ci.
